# EUROPÄISCHE PATENTANMELDUNG

(11) **EP 1 237 386 A1**
(43) Veröffentlichungstag der Anmeldung: **04.09.2002**
(21) Anmeldenummer: 01104811.3
(22) Anmeldetag: 27.02.2001
(51) Int. Cl.: H04Q 7/38

(54) **Verfahren zur Relokation des Diversitätspunktes einer mobilen Station in einem Funkzugriffsnetz**

(71) Anmelder: SIEMENS AKTIENGESELLSCHAFT, 80333 München (DE)
(72) Erfinder: Fiter, Bruno, 17200 Royan (FR); Flender, Hans-Ulrich, 89131 Illerkirchberg (DE); Gerlich, Notker, 85540 Haar (DE); Larmour, Chris, 80798 München (DE); Reim, Thomas, 88481 Balzheim (DE); Troch, Eddy, 2547 Lint (BE)

(57) **Zusammenfassung**

Die Erfindung betrifft ein Verfahren zur Relokation einer mobilen Station (UE) in einem Kommunikationsnetz, umfassend ein Kernnetz (CN) und ein Funkkommunikationsnetz (RAN) mit zumindest einer ersten und einer zweiten Funknetzsteuereinrichtung (UPS), wobei die Verwaltung der mobilen Station (UE) und/oder die Übertragung von zur mobilen Station (UE) zu übertragenden Daten von der ersten Funknetz-Steuereinrichtung (S-UPS) der zweiten Funknetz-Steuereinrichtung (T-UPS) übergeben wird (handover). Zur Vereinfachung der Relokationsprozedur wird vorgeschlagen, Daten, die nach dem handover noch an der ersten Funknetz-Steuereinrichtung S-UPS ankommen oder dort zwischengespeichert sind, unter Ausnutzung einer Funktionalität der ersten Funknetz-Steuereinrichtung(S-UPS) zu einer entsprechenden Funktionalität der zweiten Funknetz-Steuereinrichtung (T-UPS) zu übermitteln und von dort zur mobilen Station UE weiterzuleiten.

## Beschreibung

Die Erfindung betrifft ein Verfahren zur Relokation eines Diversitätspunktes einer mobilen Station mit Merkmalen gemäß dem Oberbegriff des Patentanspruchs 1 sowie ein Funk-Kommunikationssystem mit den Merkmalen gemäß dem Oberbegriff des Patentanspruchs 13.

Mobilfunk-Kommunikationssysteme können in ein Kernnetz CN, in dem Nutz- und Signalisierungsdaten einer Vielzahl von Endgeräten über weite Strecken leitungsgebunden befördert werden, und ein Funkzugangsnetz RAN (radio access network) aufgeteilt werden, welches im allgemeinen eine Mehrzahl von physikalischen Netzwerkknoten, insbesondere Funknetz-Steuereinrichtungen, umfasst, deren Aufgabe es ist, von den Endgeräten empfangene Daten in ein für die Übertragung auf dem Kernnetz CN geeignetes Format umzusetzen und umgekehrt das Format der vom Kernnetz empfangenen Daten an die Funkübertragung anzupassen und an diejenige Funkstation weiterzuleiten, in deren Sendebereich sich das betreffende Endgerät befindet.

Hochentwickelte Kommunikationssysteme, wie z.B. Mobilfunksysteme GSM (Global System for Mobile Communications) oder UMTS (Universal Mobile Telecommunications System) und Datennetze, die der Steuerung eines Paketversand-Protokolls, insbesondere dem Internetprotokoll IP unterliegen, ermöglichen einer Vielzahl von mobilen Stationen parallel zueinander eine Funkverbindung über eine Netz-Steuereinrichtung des entsprechenden Kommunikationsnetzes aufzubauen und für einen Datenaustausch mit entfernten Einrichtungen zu benutzen. Um eine störende Überlagerung der Signale der vielen Funkverbindungen zu verhindern, findet die jeweilige Kommunikation zwischen den einzelnen mobilen Stationen und der jeweils zugeordneten Netz-Steuereinrichtung z.B. über eindeutig zugeordnete Frequenzen, innerhalb fest zugeordneter Zeitschlitze und/oder mit Hilfe kodierter Signale statt.

Die zu leitenden Daten umfassen einerseits Nutzdaten, d.h. Daten, die zwischen zwei Benutzern von mobilen Stationen übermittelt werden sollen, und andererseits Signalisierungsdaten, die zur Steuerung interner Vorgänge des Mobilfunk-Kommunikationssystems erzeugt und verarbeitet werden. Beide Arten von Daten müssen zwischen dem Funkzugangsnetz und einer mit diesem kommunizierenden mobilen Station ausgetauscht werden.

Im Funkzugangsnetz kann zwischen Funktionalitäten, die für die Übertragung von Nutzdaten, und Funktionalitäten, die für den Transport der Signalisierungsdaten verantwortlich sind, unterschieden werden. Erstere werden als Teilnehmerebenenfunktionen (User Plane Functions UPF) und letztere als Steuerebenenfunktionen (Control Plane Functions CPF) bezeichnet.

Die vorliegende Erfindung wird nachfolgend anhand eines UMTS-basierenden Mobilfunksystems beschrieben. Die Eigenschaften des erfindungsgemäßen Systems sind jedoch gleichfalls auf GSM-basierte Mobilfunksysteme übertragbar.

Jede Funknetzsteuereinrichtung verfügt über eine Mehrzahl von User Plane Functions, denen jeweils innerhalb des Zugangsnetzes eine Adresse zugeteilt ist, mit deren Hilfe für eine bestimmte mobile Station bestimmte Datenpakete zu derjenigen UPF geleitet werden, die mit dieser mobilen Station kommuniziert.

Der Austausch von Signalisierungsprotokollen im Funkzugangsnetz wird durch Teilnehmereinrichtungsfunktionen UEF (User Equipment Function) gesteuert, die in einem Funksteuerungsserver RCS (Radio Control Server) angesiedelt sein können, der einen weiteren physikalischen Knoten im Funkzugangsnetz RAN bildet.

Wenn sich eine mobile Station vollständig aus dem Überdeckungsbereich einer Basisstation einer Funknetz-Steuereinrichtung herausbewegt, muss diese Basisstation bzw. der entsprechende Diversitätszweig aus dem sog. Diversitätsbaum entfernt werden, während umgekehrt Basisstationen bzw. Diversitätszweige ohne Übertragungsunterbrechung hinzugenommen werden müssen, wenn sich die mobile Station in deren Überdeckungsbereich hinein bewegt. Ein solcher Übergabemechanismus, bei dem die mobile Station stets mit mehreren Basisstationen kommuniziert, wird als "soft handover" bezeichnet.

Im Gegensatz dazu bricht bei einem sog. "hard handover" die Verbindung zu einer Basisstation abrupt ab und muss unmittelbar auf eine andere Basisstation umgelegt werden.

Die vorliegende Erfindung ermöglicht die Relokation einer mobilen Station sowohl bei einem soft- als auch bei einem hard handover.

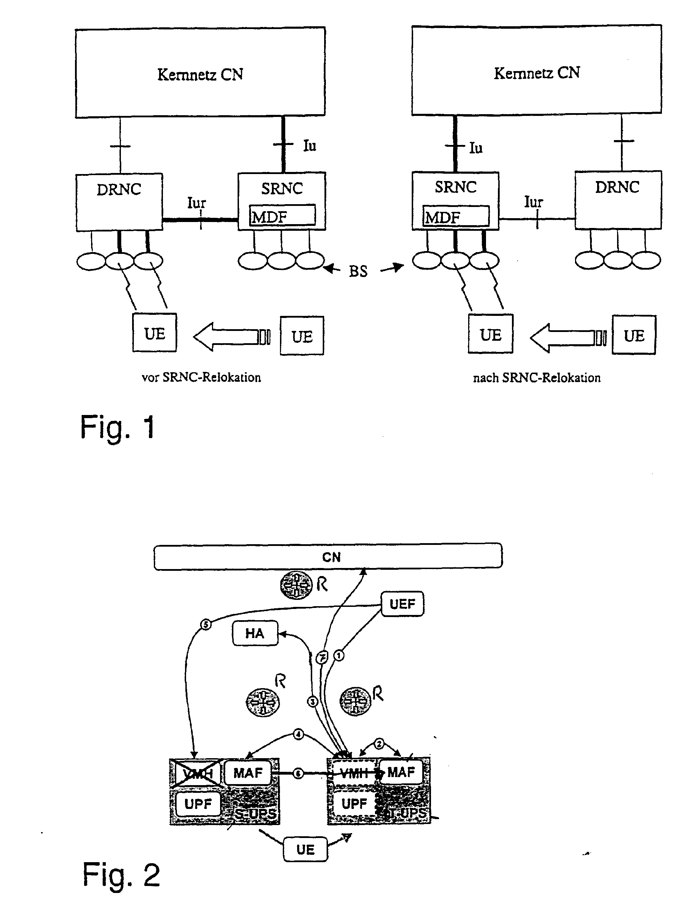

Eine bekannte Lösung zur Realisierung der Umlegung bzw. Relokation des Diversitätspunktes in einem Funkzugangsnetz wird nachfolgend beschrieben. In Fig. 1 sind zwei Zustände eines solchen Netzes dargestellt. Zu sehen sind jeweils ein Kernnetz CN, das mit einer bedienenden Funknetz-Steuereinrichtung SRNC (Serving Radio Network Controller) und einer Ziel-Funknetz-Steuereinrichtung DRNC (Drift Radio Network Controller) verbunden ist. An beide Funknetz-Steuereinrichtungen DRNC und SRNC ist eine Vielzahl von Funkstationen bzw. Basisstationen BS angeschlossen. Die linke Abbildung zeigt eine Situation, in der sich eine mobile Station UE aus dem Bereich der bedienenden Funknetz-Steuereinrichtung SRNC in den Bereich einer anvisierten Funknetz-Steuereinrichtung DRNC bewegt und dabei der bedienenden Funknetz-Steuereinrichtung noch voll zugeordnet ist.

Nach der dargestellten Funkaufnahme mit je zwei Basisstationen BS der anvisierten Funknetz-Steuereinrichtung DRNC findet ein Datenaustausch der mobilen Station UE mit dem Kernnetz CN über die Funkverbindungen, über die Verbindungen zwischen den entsprechenden Basisstationen BS und der anvisierten Funknetz-Steuereinrichtung DRNC, über eine Verbindung Iur mit der bedienenden Funknetz-Steuereinrichtung SRNC und über eine Verbindung Iu mit dem Kernnetz CN bzw. umgekehrt statt.

Sobald die Bedingungen für eine Übergabe bzw. Relokation vorliegen, übernimmt die zuvor anvisierte Funknetz-Steuereinrichtung DRNC die Funktion der bedienenden Funknetz-Steuereinrichtung SRNC, wie in der rechten Abbildung dargestellt ist. Die Datenkommunikation der mobilen Station UE mit dem Kernnetz CN erfolgt nunmehr direkt von der mobilen Station UE über eine der entsprechenden Basisstationen BS, über die bedienende Funknetz-Steuereinrichtung SRNC und über eine Verbindung Iu bzw. umgekehrt.

Für UMTS, Fassung 99 wurde unter 3GPP (3^{rd} Generation Partnership Project) für die Relokation eine Relokationsfunktion mit der Bezeichnung "Serving RNC Relokation" standardisiert. Diese Lösung ermöglicht die exklusive Anwendung UMTS-spezifischer Protokolle (3GPP TS 23.060). Die bislang durchgeführte Relokationsprozedur ist jedoch relativ kompliziert und zeitaufwendig.

Es ist daher die Aufgabe der vorliegenden Erfindung, den Datenpaketverlust während einer Relokation einer mobilen Station zu verringern.

Diese Aufgabe wird durch das Verfahren zur Relokation mit den Merkmalen des Patentanspruchs 1 sowie durch ein Kommunikationssystem zur Durchführung eines solchen Verfahrens gemäß den Merkmalen des Patentanspruchs 13 gelöst.

Vorteilhafte Ausgestaltungen sind Gegenstand von abhängigen Ansprüchen.

Ein Verfahren zur Relokation einer mobilen Station bei geringem Datenpaketverlust in einem Funk-Kommunikationsnetz mit zumindest einer ersten und einer zweiten Funknetz-Steuereinrichtung, wobei die Verwaltung der mobilen Station und/oder die Übertragung von zur mobilen Station zu übertragenden Daten von der ersten Funknetz-Steuereinrichtung an die zweite Funknetz-Steuereinrichtung übergeben wird (handover), ist besonders vorteilhaft, wenn Daten, die nach dem handover noch an der ersten Funknetz-Steuereinrichtung ankommen oder dort zwischengespeichert sind, unter Ausnutzung einer Funktionalität der ersten Funknetz-Steuereinrichtung an eine entsprechende Funktionalität der zweiten Funknetz-Steuereinrichtung übermittelt und von dort zur mobilen Station weitergeleitet werden.

Die Relokation der mobilen Station, d.h. die Einrichtung des neuen Übertragungsweges zwischen dem Kernnetz und der mobilen Station, wird gemäß einer Weiterbildung der Erfindung unter Verwendung eines Mobil-Internetprotokolls MIP durchgeführt. Der momentan übliche MIP-Standard ist entweder IETF MIPv4 (RFC2002) oder IETF MIPv6 (draft_IETF_mobileIP_Ipv6_12).

Als Funktionalität, mit deren Hilfe die Daten zwischen den beiden Funknetz-Steuereinrichtungen übermittelt werden, ist insbesondere eine Mobil-Ankerfunktion MAF geeignet. Eine MAF wird insbesondere bei großen Funkzugangsnetzen verwendet, in denen zum Erreichen des Heimatagenten zu viel Zeit benötigt wird. Als neue Entität ist daher eine MAF in den Funknetz-Steuereinrichtungen vorgesehen. Diesbezüglich wird auf den IETF-Entwurf HMIPv4v6: draft_elmalki_soliman_HMIPv4v6_00 verwiesen.

Als Klient zur Durchführung der MIP-Registrierung der mobilen Station wird vorzugsweise ein virtueller mobiler Host erzeugt.

Sofern die Mobile Station selbst keinen virtuellen mobilen Host aufweist, wird ein solcher beispielsweise in derjenigen Funknetz-Steuereinrichtung geschaffen, die als (neue) bedienende Funknetz-Steuereinrichtung agiert.

In Verbindung mit dem handover einen virtuellen mobilen Host in der bedienenden Funknetz-Steuereinrichtung einzurichten, ermöglicht eine Umsetzung in bestehenden Systemen ohne aufwendige bauliche oder programmiertechnische Anpassung.

Der virtuelle Host übernimmt hinsichtlich der Neuregistrierung und Adreßverwaltung die der mobilen Station gemäß dem MIP-Standard zugedachte Funktion und übernimmt außerdem vorzugsweise die Funktion eines Adressenspeichers und Adressenverwalters für funktionswichtige netzinterne Adressen.

Nach der Einrichtung des virtuellen mobilen Hosts registriert sich dieser vorzugsweise beim Heimatagenten, der neuen lokalen Mobil-Ankerfunktion und im Kernnetz. Bei der Lösung, in der der VMH Bestandteil der mobilen Station ist, müsste der geplante IETF-Standard HMIP für die Klientenfunktion um einen Registrierungsvorgang bei der bedienenden mobilen Ankerfunktion ergänzt werden.

Gemäß einer bevorzugten Weiterbildung der Erfindung wird der virtuelle mobile Host von einem Funksteuerungsserver RCS und insbesondere von einer Teilnehmereinrichtungsfunktion UEF, die Bestandteil des RCS ist, eingerichtet.

Um Daten, die nach dem handover noch bei der ersten Funknetz-Steuereinrichtung ankommen, bzw. dort zwischengespeichert sind, noch an die zweite Funknetz-Steuereinrichtung weiterzuleiten, übermittelt der virtuelle mobile Host die Adresse der lokalen MAF an die MAF der ersten Funknetz-Steuereinrichtung.

Das handover, d.h. die Übergabe der Verwaltung an die zweite Funknetz-Steuereinrichtung, wird vorzugsweise durch die mobile Station eingeleitet.

Gemäß einer weiteren bevorzugten Weiterbildung der Erfindung werden Daten, die während der Übergabe der Verwaltung an einer Funknetz-Steuereinrichtung ankommen, zwischengespeichert.

Nach der Übergabe der Verwaltung werden die Ressourcen der mobilen Station in der ersten Funknetz-Steuereinrichtung, insbesondere die Teilnehmerebenenfunktion UPF gelöscht.

Die Relokation der mobilen Station wird vorzugsweise mittels des Mobil-Internetprotokolls MIPv6 durchgeführt.

Vorteilhafterweise ermöglicht ein Funk-Kommunikationssystem mit zumindest einer ersten und einer zweiten Funknetz-Steuereinrichtung zur Verwaltung zumindest einer mobilen Station, wobei die Verwaltung der mobilen Station und/oder die Übertragung von zur mobilen Station zu übertragenden Daten von der ersten Funknetz-Steuereinrichtung an die zweite Funknetz-Steuereinrichtung übergebbar ist, die Umsetzung eines solchen Verfahrens, wenn zumindest eine Einrichtung zum Durchführen der IP-Registrierung, wie z.B. ein virtueller mobiler Host, vorgesehen ist.

Die Erfindung wird nachstehend anhand der beigefügten Zeichnungen beispielhaft näher erläutert. Es zeigen:
- Fig. 1: den Zustand eines Funknetzes vor bzw. nach einer Relokation einer mobilen Station gemäß dem UMTS-Standard, Version 99;
- Fig. 2: einen schematischen Ablauf einer Relokationsprozedur gemäß einem Ausführungsbeispiel der Erfindung in einem IP basierten Funkzugangsnetz; und
- Fig. 3-5: schematisch die Systemzustände in einem Kommunikationsnetz während einer Relokation des Diversitätspunktes einer mobilen Station bei einem hard handover.

Wie aus den Fig. 1 und 2 ersichtlich, ist das Kommunikationsnetz gemäß Fig. 2 im wesentlichen wie das in Fig. 1 dargestellte Kommunikationsnetz aufgebaut.

Zur Unterscheidung der neuen Technologie werden die Funknetz-Steuereinrichtungen SRNC bzw. DRNC nachfolgend als bedienender bzw. anvisierter Teilnehmerebenen-Server S-UPS (Serving User Plane Server) bzw. T-UPS (Target User Plane Server) bezeichnet.

Das Kernnetz CN weist u.a. einen integrierten GPRS-Diensteknoten IGSN (Integrated GPRS Service Note; GPRS: General Packet Radio Service). Dieser dient als Gateway bzw. Schnittstelle des Kernnetzes CN zum Funkzugangsnetz, das allgemein als Radio Access Network RAN bezeichnet wird. Das Funkzugangsnetz RAN weist eine Vielzahl hier relevanter Einrichtungen auf, insbesondere die Teilnehmerebenen-Server UPS, über die Verbindungen mit stationären oder mobilen Teilnehmerstationen UE aufgebaut und unterhalten werden. Die den Teilnehmerebenen-Servern UPS zugeordneten Basisstationen sind ebenfalls Bestandteil des RAN, hier jedoch nicht gezeigt.

Weitere Einrichtungen im Funkzugangsnetz RAN sind sog. Router R, die als Schnittstellen zum sog. IP-Backbone, also Internetprotokoll-gesteuerten Fernleitungen bzw. Hauptleitungen dienen.

Weiterhin umfasst das Funkzugangsnetz RAN Teilnehmereinrichtungsfunktionen UEF (User Equipment Functions) für alle Signalisierungen einer mobilen Station UE. Des weiteren befindet sich im Funkzugangsnetz ein Heimatagent (Home Agent), der vergleichbar zum Heimatregister in bestehenden Funk-Kommunikationsnetzen zur Registrierung eines mobilen Teilnehmers bzw. einer mobilen Station UE dient.

Im bedienenden Teilnehmerebenen-Server S-UPS sind in üblicher Weise Teilnehmerebenenfunktionen UPF vorhanden, die für die Übertragung von Nutzdaten von einem Knoten (S-UPS) zu einem Endgerät verantwortlich sind.

Bei dem hier dargestellten Ausführungsbeispiel wird ein Relokationsverfahren vorgeschlagen, bei dem eine Kombination von radiospezifischen Protokollen, wie sie beispielsweise als UMTS-spezifische Protokolle bekannt sind, mit IP-basierten Protokollen, wie sie beispielsweise aus dem IETF-standardisierten Mobilitätsprotokoll "Mobile IP Version 6 (MIPv6)" bekannt sind, eingesetzt werden.

Insbesondere wird zur Signalisierung des Übergangs der Verwaltung der mobilen Station UE und/oder der Übertragung von zur mobilen Station UE zu übertragenden Daten von der S-UPS zur T-UPS ein MIP-Protokoll in Verbindung mit einem Protokoll aus einem Mobilfunksystem verwendet.

Die Signalisierungsprotokolle für eine mobile Station UE werden im Funkzugangsnetz RAN, wie bereits erwähnt, durch die sog. Teilnehmereinrichtungsfunktion UEF gehandhabt.

Für die Relokation einer mobilen Station unter Verwendung eines MIP-Protokolls ist ein virtueller mobiler Host VMH vorgesehen, der als Klient für die MIP-Registrierung dient.

Des weiteren umfasst der Teilnehmerebenen-Server UPS eine mobile Ankerfunktion MAF, über die Nachrichten von und zu einer mobilen Station UE geleitet werden.

Im folgenden wird der Ablauf eines Relokationsvorgangs kurz anhand von Fig. 2 erläutert.

Wenn sich eine mobile Station UE im Funkzugangsnetz RAN durch eine Kommunikationsaufnahme über eine Basisstation BS anmeldet, findet für diese mobile Station UE eine IP-Registrierung beim Heimatagenten HA, der lokalen mobilen Ankerfunktion MAF und dem Kernnetz CN statt, so dass stromabwärts in Richtung der mobilen Station geleitete Datenpakete über die S-UPS geleitet werden.

Solange die mobile Station UE einen Diversitätszweig (Diversity Leg) aufweist, über den sie mit einer Basisstation BS verbunden ist, die an den bedienenden Teilnehmerebenenserver S-UPS angeschlossen ist, werden keine IP-Neuregistrierungen für die mobile Station UE vorgenommen.

UMTS-spezifische Mobilitätsfunktionen sind für das Hinzufügen oder Entfernen von Diversitätszweigen während eines softhandover verantwortlich.

Das Entfernen von Diversitätszweigen wird in der Regel durch Zellaktualisierungsnachrichten von der mobilen Station UE aus eingeleitet.

Wenn die Teilnehmereinrichtungsfunktion UEF nach dem Entfernen eines Diversitätszweiges erfasst, dass der letzte Diversitätszweig zwischen der mobilen Station UE und dem bedienenden Teilnehmerebenenserver S-UPS entfernt wurde, erzeugt die UEF eine Teilnehmerebenenfunktion UPF im anvisierten Teilnehmerebenenserver T-UPS, wie in Fig. 2 durch den mit einer 1 gekennzeichneten Pfeil dargestellt ist.

In ähnlicher Weise erzeugt die Teilnehmereinrichtungsfunktion UEF eine Teilnehmerebenenfunktion UPF im anvisierten Teilnehmerebenenserver T-UPS, wenn die UEF eine Anforderung für ein hard handover empfängt.

Außerdem sendet die Teilnehmereinrichtungsfunktion UEF dem anvisierten Teilnehmerebenenserver UPS die Nachricht, einen virtuellen mobilen Host VMH einzurichten (dieser kann auch Bestandteil der neu eingerichteten UPF sein). Mit Hilfe des neu eingerichteten virtuellen Hosts VMH kann die MIP-Registrierung beginnen.

Auf der Internetprotokoll-Ebene (IP Layer) wird der Übermittlungspfad zwischen dem Kernnetz CN und der mobilen Station UE durch einen MIP-Registrierungsvorgang ("Binding Update") geändert, der durch den neuen bedienenden Teilnehmerebenenserver S-UPS veranlasst wird. Dabei registriert sich der virtuelle mobile Host VMH mittels MIP bei der lokalen MAF, wie durch den Pfeil 2 angezeigt ist, beim Heimatagenten HA, wie durch den Pfeil 3 angezeigt ist, und beim Kernnetz, wie durch den Pfeil 7 angezeigt ist. Die MIP-Registrierung kann wahlweise auch von einer MIP-Klientenfunktion, die in der mobilen Station UE vorgesehen ist, ausgeführt werden.

Zusätzlich sendet die MIP-Klientenfunktion (der virtuelle mobile Host VMH) ein Verbindungsupdate zur mobilen Ankerfunktion (MAF) des ehemals bedienenden Teilnehmerebenenservers S-UPS, wodurch die stromabwärts übermittelten Daten zum anvisierten Teilnehmerebenenserver T-UPS umgeleitet werden, wie durch den Pfeil 4 gekennzeichnet ist. Das Verbindungsupdate enthält insbesondere die Adresse der mobilen Ankerfunktion MAF des anvisierten Teilnehmerebenenservers T-UPS.

Dadurch können Datenpakete, die sich noch auf dem Weg zum alten bedienenden Teilnehmerebenenserver S-UPS befinden bzw. zwischengespeichert sind, die mobile Station über die Verbindung zwischen den beiden mobilen Ankerfunktionen MAF immer noch erreichen (Pfeil 6), da diese Verbindung über eine gewisse Zeit aufrecht erhalten wird. Das Löschen des letzten Diversitätszweigs bzw. der letzten Verbindung erfolgt erst nach dem Ablauf einer Umschaltzeit nach der Übergabe der Verwaltung.

Schließlich weist die Teilnehmereinrichtungsfunktion UEF den alten bedienenden Teilnehmerebenenserver S-UPS an, die Ressourcen für die mobile Station UE zu löschen (Pfeil 5).

Hinsichtlich des als zugrundeliegendes Kommunikationssystem beispielhaft gewählten UMTS wird bezüglich der Prinzipien und Registrierungsfunktionen auf insbesondere MIPv6 verwiesen, insbesondere auf die Veröffentlichungen IETF spec "mobility support in IPv6", draft-ietf-mobile IP-IPv6-12. Das Einbinden von MIPv6 bietet eine Vielzahl von Vorteilen:

Es ermöglicht einer Einrichtung, Datenpakete zu einer mobilen Station UE mit einer festen IP-Adresse zu senden, wobei diese feste IP-Adresse vom tatsächlichen momentanen Anbindungspunkt dieser mobilen Station UE an das IP-Netz unabhängig ist, in unserem Fall der Anbindung an die Basisstation BS des Funkzugangsnetzes RAN. Dies bedeutet insbesondere, dass die Teilnehmerebenen-Protokollschichten oberhalb des Internetprotokolls IP vom Durchführen von Änderungen von IP-Adressen entlastet werden.

Weiterhin ist MIPv6-Software als kommerzielle IP-Software verfügbar, so dass Entwicklungsarbeiten eingespart werden können.

Die vorstehend beschriebene Lösung kann insbesondere in einer verteilten IP basierten RAN-Architektur verwendet werden, bei der Funktionen auf der Teilnehmerebene und Funktionen auf der Steuerebene über mehrere physikalische Knoten verteilt sind.

Zur Umsetzung des erfindungsgemäßen Relokationsverfahrens wird vorgeschlagen, einerseits einen Teil der IP-Standardmechanismen auszutauschen, um die Relokationsprozedur zu beschleunigen und andererseits die UMTS-Funktionalität zu modifizieren, um Paketverluste während der Relokationsprozedur zu verhindern.

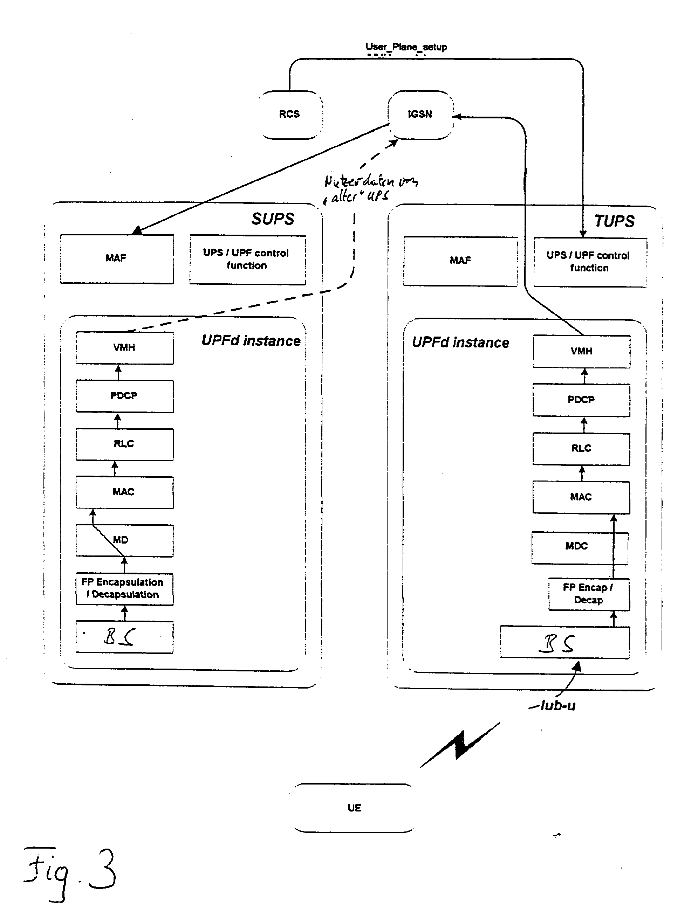

Nachfolgend wird anhand der Fig. 3 - 5 der Ablauf einer Relokation für die Einrichtung eines neuen bedienenden Teilnehmerebenenservers UPS bei einem hard handover erläutert.

Fig. 3 stellt dabei die Situation dar, bei der ein erster Teilnehmerebenenserver SUPS der bedienende Teilnehmerebenenserver, und ein zweiter Teilnehmerebenenserver TUPS der anvisierte Teilnehmerebenenserver ist. Die Teilnehmereinrichtungsfunktionen UEF sind im Funksteuerungsserver RCS angeordnet, der einen physikalischen Knoten darstellt. Das vorliegende Funkzugangsnetz RAN weist eine verteilte Architektur auf. Die Teilnehmerebenenfunktionen, die auf eine einzelne mobile Station UE bezogen sind, sind als zugeordnete Teilnehmerebenenfunktionen UPFd (dedicated user plane functions) dargestellt. Diese zugeordneten Teilnehmerebenenfunktionen UPFd werden jeweils in einem Teilnehmerebenenserver UPS verwaltet. Die funktionalen Blöcke VMH, PDCP, RLC, MAC, MDF und FP sind Unterfunktionen der Entität UPFd.

Die zugeordneten Teilnehmerebenenfunktionen UPFd werden durch entsprechende Steuerebenennachrichten erzeugt, wie vorstehend beschrieben wurde.

Im Kernnetz CN dient der integrierte GPRS-Diensteknoten als Gateway zum Funkzugangsnetz RAN. Der integrierte GPRS-Diensteknoten setzt stromabwärts übermittelte Nutzerdaten in IP-Datenpakete um, die die Adresse des virtuellen mobilen Hosts VMH als Zieladresse und die Adresse des integrierten GPRS-Diensteknoten als Quelladresse aufweisen.

Der virtuelle mobile Host weist eine lokale IP-Adresse auf, die üblicherweise als Care-Of-Adresse bezeichnet wird und registriert sich damit beim Heimatagenten HA, der mobilen Ankerfunktion MAF und dem integrierten GPRS-Diensteknoten, wodurch Daten, die in Abwärtsrichtung übertragen werden, und am IGSN-Knoten ankommen, zur lokalen mobilen Ankerfunktion MAF und zum virtuellen mobilen Host weitergeleitet werden. Der VMH entkapselt die IP-Datenpakete und übermittelt die Nutzerdaten an die Basisstation. In Aufwärtsrichtung verarbeitet der virtuelle mobile Host VMH die über die Funkverbindung (über den Knoten B) empfangenen Nutzerdaten und sendet diese direkt zum IGSN-Diensteknoten.

Ausgehend von diesem Systemzustand wird nachfolgend die Relokation des bedienenden Teilnehmerebenenservers beschrieben.

Nach einer Aktivierung von der mobilen Station UE aus, regt der Funksteuerungsserver RCS die Relokationsprozedur durch das Erzeugen eines virtuellen mobilen Hosts VMH beim anvisierten Teilnehmerebenenserver T-UPS über eine Anweisung User_Plane_Setup an, wie in Fig. 3 gezeigt ist. Diese Anweisung erzeugt endgerätespezifische Instanzen in einer Teilnehmerebenenfunktion UPFd, insbesondere die Instanzen PDCP, RLC, MAC und VMH in dem anvisierten Teilnehmerebenenserver T-UPS.

Der Funksteuerungsserver befiehlt auch der Basisstation BS, eine Funkverbindung einzurichten. In diesem Zustand können stromaufwärts übermittelte Daten von der mobilen Station UE den IGSN-Diensteknoten über die Funkverbindung, die Basisstation BS und den anvisierten Teilnehmerebenenserver T-UPS erreichen.

Stromabwärts übermittelte Daten, die noch am ehemals bedienenden Teilnehmerebenenserver S-UPS ankommen, können nicht mehr über die Funkverbindung weitergeleitet werden und müssen in der mobilen Ankerfunktion MAF der S-UPS zwischengespeichert werden.

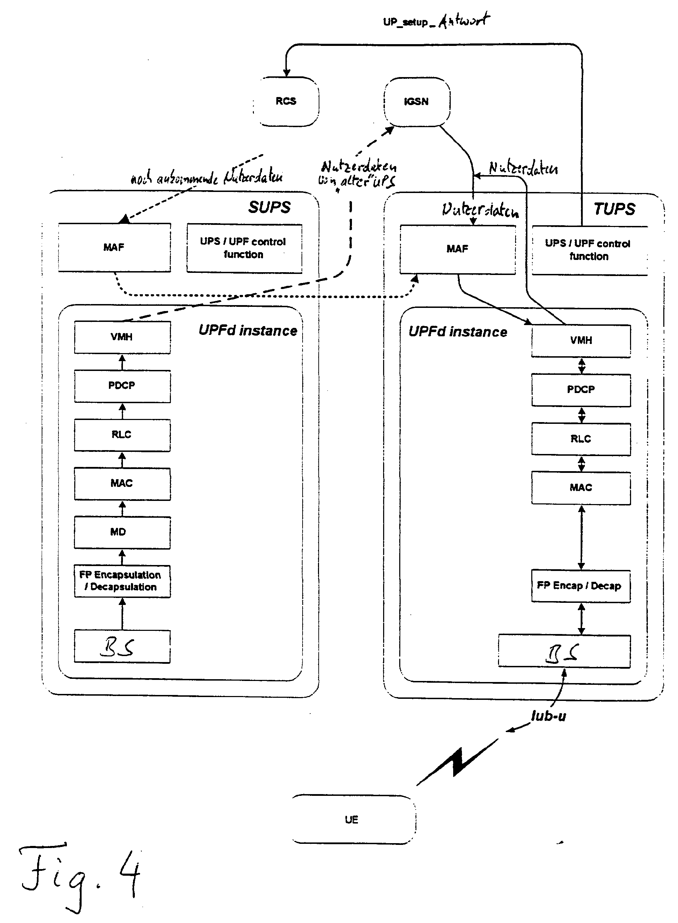

Um die Daten an die mobile Station weiterleiten zu können, sendet der neue virtuelle mobile Host automatisch Verbindungsupdates (Adressnachrichten) an die MAF des T-UPS, an den HA und an den IGSN-Diensteknoten. Außerdem sendet der virtuelle mobile Host VMH ein Verbindungsupdate an die MAF der S-UPS, wodurch die Adresse der mobilen Ankerfunktion MAF des T-UPS als neue Care-Of-Adresse registriert wird. In diesem Zustand (Fig. 4) werden die noch auf dem Weg zur S-UPS befindlichen oder zwischengespeicherten Datenpakete von der MAF des S-UPS an die MAF des T-UPS übermittelt, wodurch sie zur zugeordneten Teilnehmerebenenfunktion UPFd im T-UPS und zur mobilen Station UE weitergeleitet werden.

Datenpakete, die am IGSN-Diensteknoten oder am Heimatagenten HA (nicht gezeigt) ankommen, werden nun direkt zur MAF des T-UPS und von dort weiter zur mobilen Station UE geleitet.

Der anvisierte Teilnehmerebenenserver T-UPS informiert den Funksteuerungsserver RCS, dass das handover abgeschlossen ist (soweit es den T-UPS betrifft). Dies geschieht durch Übermittlung einer Antwort UP_setup_Antwort.

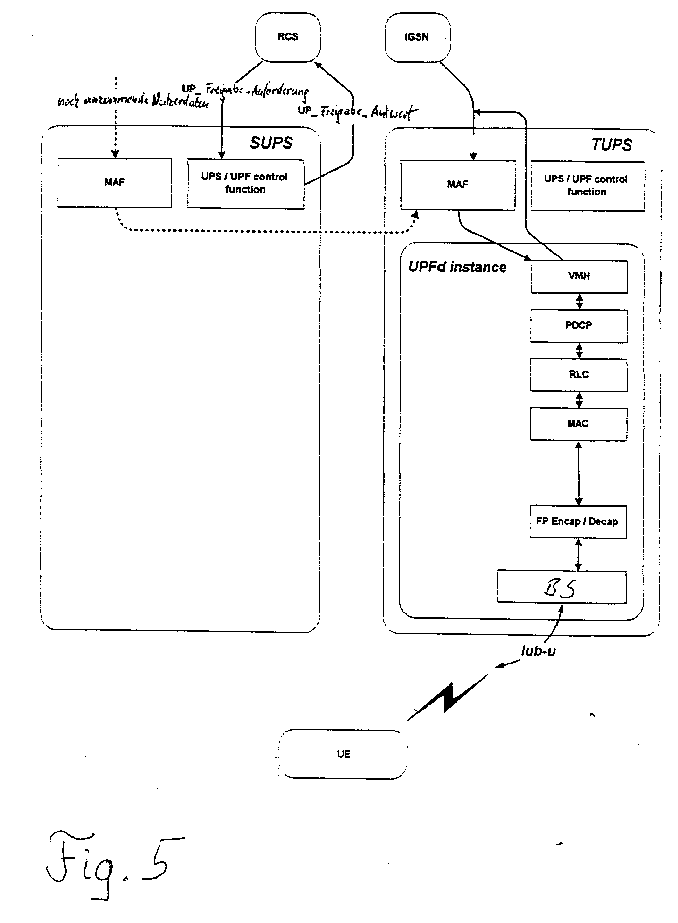

Wie in Fig. 5 dargestellt ist, löscht der Funksteuerungsserver RCS die zugeordnete Teilnehmerebenenfunktion UPFd im bedienenden Teilnehmerebenenserver UPS nach dem Empfang der UP_setup-Antwort und gibt daraufhin eine Mitteilung UP_freigeben an die S-UPS aus.

Nachdem die S-UPS die Anforderung UP_freigeben erhalten hat, wartet sie, bis entsprechende Pufferspeicher leer sind, bevor der ehemals bedienende Teilnehmerebenenserver S-UPS die zugeordnete Teilnehmerebenenfunktion UPFd einschließlich des virtuellen mobilen Hosts VMH entfernt und die Anforderung UP_freigeben mit einer Nachricht UP_freigeben_antwort beantwortet.

### Bezugszeichenliste

- UE: Mobile Station
- MDF: Makrodiversitätsfunktion
- SRNC: Bedienende Funknetzsteuereinrichtung
- DRNC: Anvisierte Funknetzsteuereinrichtung
- CN: Kernnetz
- R: Router
- HA: Heimatagent
- UEF: Teilnehmereinrichtungsfunktion
- RCS: Funksteuerungsserver
- IGSN: Integrierter GPRS-Diensteknoten
- RAN: Funkzugangsnetz
- VMH: Virtueller mobiler Host
- BS: Basisstation
- S-UPS: Bedienender Teilnehmerebenenserver
- T-UPS: Anvisierter Teilnehmerebenenserver
- UPFd: Zugeordnete Teilnehmerebenenfunktion
- MAF: Mobile Ankerfunktion
- MAC: Mediumszugriffs-Steuerebene

## Patentansprüche

1. Verfahren zur Relokation einer mobilen Station (UE) in einem Kommunikationsnetz, umfassend ein Kernnetz (CN) und ein Funk- Kommunikationsnetz (RAN) mit zumindest einer ersten und zweiten Funknetz-Steuereinrichtung (UPS), wobei die Verwaltung der mobilen Station (UE) und/oder die Übertragung von zur mobilen Station (UE) zu übertragenden Daten von der ersten Funknetz-Steuereinrichtung (S-UPS) an die zweite Funknetz-Steuereinrichtung (T-UPS) übergebbar ist (handover),
**dadurch gekennzeichnet,**
**dass** Daten, die nach einem erfolgten handover an der ersten Funknetz-Steuereinrichtung (S-UPS) ankommen oder dort zwischengespeichert sind, unter Ausnutzung eine Funktionalität der ersten Funknetz-Steuereinrichtung (S-UPS) zu einer entsprechenden Funktionalität der zweiten Funknetz-Steuereinrichtung (T-UPS) übermittelt und von dort zur mobilen Station (UE) weitergeleitet werden.

2. Verfahren nach Anspruch 1,
**dadurch gekennzeichnet,**
**dass** die Funktionalität der ersten und zweiten Funknetz-Steuereinrichtung (S-UPS, T-UPS) eine Mobil-Ankerfunktion (MAF) ist.

3. Verfahren nach Anspruch 1 oder 2,
**dadurch gekennzeichnet,**
**dass** der Übertragungsweg zwischen dem Kernnetz (CN) und der mobilen Station (UE) bei einem handover unter Verwendung eines Mobil-Internetprotokolls (MIP) geändert wird (MIP-Registrierung).

4. Verfahren nach Anspruch 3,
**dadurch gekennzeichnet,**
**dass** als Klient zur Durchführung der MIP-Registrierung ein virtueller mobiler Host (VMH) erzeugt wird.

5. Verfahren nach Anspruch 4,
**dadurch gekennzeichnet,**
**dass** der virtuelle mobile Host in der zweiten Funknetz-Steuereinrichtung (T-UPS) erzeugt wird.

6. Verfahren nach Anspruch 4 oder 5,
**dadurch gekennzeichnet,**
**dass** sich ein MIP-Klient in der mobilen Station (UE) oder der virtuelle mobile Host (VMH) in der bedienenden Funknetz-Steuereinrichtung (UPS) bei der lokalen Mobil-Ankerfunktion (MAF), bei einem Heimatagenten (HA) und im Kernnetz (CN) registriert.

7. Verfahren nach einem der Ansprüche 4 bis 6,
**dadurch gekennzeichnet,**
**dass** die Erzeugung des virtuellen mobilen Hosts (VMH) durch einen Funksteuerungsserver (RCS), insbesondere durch eine im Funksteuerungsserver (RCS) vorgesehene Teilnehmereinrichtungsfunktion (UEF) initiiert wird.

8. Verfahren nach einem der Ansprüche 4 bis 7,
**dadurch gekennzeichnet,**
**dass** der MIP-Klient oder der virtuelle mobile Host (VMH) die Adresse der Mobil-Ankerfunktion (MAF) der zweiten Funknetz-Steuereinrichtung (T-UPS) an die Mobil-Ankerfunktion (MAF) der ersten Funknetz-Steuereinrichtung (S-UPS) übermittelt.

9. Verfahren nach einem der vorhergehenden Ansprüche,
**dadurch gekennzeichnet,**
**dass** das handover durch die mobile Station (UE) eingeleitet wird.

10. Verfahren nach einem der vorhergehenden Ansprüche,
**dadurch gekennzeichnet,**
**dass** während der Übergabe der Verwaltung bzw. der Übertragung von Daten zwischen den Funknetz-Steuereinrichtungen (S-UPS, T-UPS) an der zweiten Funknetz-Steuereinrichtung (T-UPS) eintreffende Daten zwischengespeichert werden.

11. Verfahren nach einem der vorhergehenden Ansprüche,
**dadurch gekennzeichnet,**
**dass** nach dem Einrichten einer Teilnehmerebenenfunktion (UPF) in der zweiten Funknetz-Steuereinrichtung (T-UPS) die Ressourcen für die mobile Station (UE), insbesondere die Teilnehmerebenenfunktion (UPF), in der ersten Funknetz-Steuereinrichtung gelöscht wird.

12. Verfahren nach einem der vorhergehenden Ansprüche,
**dadurch gekennzeichnet,**
**dass** zur Signalisierung des Übergangs der Verwaltung der mobilen Station (UE) (handover) und/oder der Übertragung von zur mobilen Station (UE) zu übertragenden Daten das MIP-V6 verwendet wird.

13. Funk-Kommunikationssystem mit zumindest einer ersten und einer zweiten Funknetz-Steuereinrichtung (UPS) zur Verwaltung zumindest einer mobilen Station (UE), wobei die Verwaltung der mobilen Station (UE) und/oder die Übertragung von zur mobilen Station zu übertragenden Daten von der ersten Funknetz-Steuereinrichtung (S-UPS) an die zweite Funknetz-Steuereinrichtung (T-UPS) übergebbar ist,
**dadurch gekennzeichnet,**
**dass** eine Einrichtung zum Durchführen des Verfahrens nach einem der vorhergehenden Ansprüche, insbesondere ein virtueller mobiler Host, vorgesehen ist.
